# EUROPÄISCHE PATENTANMELDUNG

(11) **EP 0 768 245 A1**
(43) Veröffentlichungstag der Anmeldung: **16.04.1997**
(21) Anmeldenummer: 96109553.6
(22) Anmeldetag: 14.06.1996
(51) Int. Cl.: B65D 33/01

(54) **Beutel mit mindenstens einer Entlüftungsstelle und Verfahren zur Herstellung des Beutels**

(30) Priorität: 13.10.1995 DE 19538146
(71) Anmelder: Rovema Verpackungsmaschinen GmbH, 35463 Fernwald (DE)
(72) Erfinder: Kleine, Manfred, 35463 Fernwald (DE); Maier, Franz, 35418 Buseck 1 (DE); Schmittberger, Jürgen, 63688 Gedern (DE); Baur, Walter, Dr., 63584 Gründau (DE)

(57) **Zusammenfassung**

Aus einem Beutel 1 kann Luft entlang eines von Schweißnähten 8, 9 begrenzten Entlüftungskanals 11 und durch eine Entlüftungsstelle 12 entweichen. Die Schweißnähte 8, 9 verlaufen parallel zu einem Beutelrand 7. Die eine Schweißnaht 9 kann ohne zusätzliche Werkzeuge und ohne zusätzlichen Zeitaufwand mit dem gleichen Schweißwerkzeug 34 wie die ohnehin nötige, den Beutel 1 verschließende Schweißnaht 8 erzeugt werden. Die Entlüftungsstelle kann ein Loch 13, oder mehrere Löcher, oder eine nicht verschweißte Stelle 21 sein.

In einer besonderen Ausgestaltung bilden die Schweißnähte 8, 9 eine Überlappungsnaht 5 eines Schlauchbeutels 2.

## Beschreibung

Die Erfindung betrifft einerseits einen Beutel mit mindestens einer Entlüftungsstelle, z.B. einen Schlauchbeutel mit einem Loch als Entlüftungsstelle und ein Verfahren zur Herstellung des Beutels.

Aus der EP-OS 0 243 750 ist ein Sack aus thermosplastischer Kunststoffolie mit Entlüftungsöffnungen bekannt. Der Sack weist an Seitenfalten schräg zum Rand des Sacks hin verlaufende Schweißnähte auf, zwischen denen Luft aus dem Innern des Sacks hin zu einer Entlüftungsöffnung strömen und entweichen kann, wodurch ein befüllter, gelagerter Sack weniger Luft enthält.

Der bekannte Sack hat zum einen den Nachteil, daß er infolge der kurzen Entlüftungsstrecke für staubendes Produkt wenig geeignet ist, da dieses Produkt die kurze Entlüftungsstrecke relativ leicht überwindet und von der ausströmenden Luft aus der Entlüftungsöffnung geblasen wird. Zum anderen besteht der Nachteil, daß die schräg verlaufenden Schweißnähte einen Mehrverbrauch an Verpackungsmaterial erfordern, da sie das für das abgepackte Produkt zur Verfügung stehende Volumen im Innern des Sacks reduzieren.

Es liegt die Aufgabe zu Grunde, einen Beutel mit mindestens einer Entlüftungsstelle derart auszugestalten, daß er auch für staubendes Produkt, wie z.B. Gips oder Zement geeignet ist, derart, daß ein Herausblasen von Produkt bei der Erzeugung eines flachen, relativ luftfreien Beutels deutlich reduziert wird. Dem Beutel soll zudem ein vergrößerter Innenraum zur Verfügung stehen, so daß er mit verringertem Verbrauch an flexiblem Verpackungsmaterial hergestellt werden kann.

Gelöst ist die Aufgabe gemäß den kennzeichnenden Teilen der Ansprüche 1 und 12.

Bei dem Beutel nach Anspruch 1 ist entlang einer geraden, parallel zum Beutelrand verlaufenden Schweißnaht eine weitere, von einem nicht verschweißten Bereich unterbrochene Schweißnaht vorgesehen. Zwischen den Schweißnähten ist mindestens ein Entlüftungskanal vorgesehen, der zu mindestens einer Entlüftungsstelle führt.

Bei dem Verfahren nach Anspruch 12 zur Herstellung eines derartigen Beutels wird eine ebene Folienbahn an einer Umformeinrichtung umgeformt, teilweise mittels Schweißnähten verschweißt, durch eine Fülleinrichtung befüllt, mittels einer weiteren Schweißnaht restverschweißt und zur Abtrennung des befüllten, verschlossenen Beutels durchtrennt. Erfindungsgemäß wird während der Erzeugung einer den Beutel verschließenden, geraden Schweißnaht der Entlüftungskanal mittels einer zweiten, den Entlüftungskanal begrenzenden Schweißnaht mit einem einzigen Schweißwerkzeug erzeugt.

Der erfindungsgemäße Beutel und das erfindungsgemäße Verfahren haben den Vorteil, daß die Verpackung von staubenden Produkten in vorteilhafter Weise erfolgen kann. Der Entlüftungskanal ist relativ lang und erzeugt dadurch einen relativ großen Strömungswiderstand. Die herausströmende Luft setzt den relativ großen Querschnitt des Entlüftungskanals nicht vorzeitig zu, so daß er gut funktioniert.

Der Entlüftungskanal wird durch eine ohnehin zu erzeugende Schweißnaht begrenzt und erhält seine maximale Länge durch Ausnutzung nahezu der gesamten Beutellänge oder -breite.

Je weiter die Entlüftungsstelle von dem nicht verschweißten Bereich der unterbrochenen Schweißnaht entfernt ist, um so unwahrscheinlicher wird ein Austritt von staubendem Produkt aus einer Entlüftungsstelle.

Dem Produkt steht ein Innenraum zur Verfügung, der auf Grund seiner Form den Hüllstoffverbrauch minimiert.

Weitere vorteilhafte Ausgestaltungen des erfindungsgemäßen Beutels und des erfindungsgemäßen Verfahrens sind in den Ansprüchen 2 bis 11 und 13 bis 15 beschrieben.

Ist der Beutel mit einer Überlappungsnaht als Längsnaht ausgebildet (Anspruch 2), so wird einerseits der Beutel nach einer bewährten Methode hergestellt und andererseits ergibt sich hierbei eine besonders günstige Art der Anbringung eines zu einer Entlüftungsstelle reichenden Entlüftungskanals. Durch Verschweißung der Überlappungsnaht mit einer geraden Schweißnaht und einer unterbrochenen Schweißnaht wird der zu der Entlüftungsstelle reichende Entlüftungskanal erzeugt (Anspruch 4). Dabei herrscht weder ein Zeitverlust noch ein Verlust an Innenraum des Beutels im Vergleich zu einer herkömmlichen Schlauchbeutelerzeugung. Lediglich die Schweißbacke zur Erzeugung der Längsnaht benötigt eine geänderte Schweißfläche. Diese Schweißfläche erzeugt zwei parallele Schweißnähte mit einem nicht verschweißten Bereich entlang einer Schweißnaht.

Ist der Beutel als Siegelrandbeutel mit Randnähten und einer Kopfnaht ausgestaltet (Anspruch 3), so können die parallelen oder quasi parallelen Schweißnähte auch in einer Randnaht, welche bei der Herstellung der Siegelrandbeutel die seitlichen Begrenzungen darstellen, verlaufen (Anspruch 6).

Bei Siegelrandbeuteln könnte auch die Kopfnaht und bei Schlauchbeuteln sowohl die Kopfnaht als auch die Bodennaht für diese Schweißnähte genutzt werden (Anspruch 5), es ergibt sich jedoch für die Unterbringung des Entlüftungskanals und der Entlüftungsstelle in einer als Überlappungsnaht ausgestalteten Längsnaht außer den bereits erwähnten Vorteilen hinsichtlich Schweißzeit und Beutelvolumen noch der Vorteil, daß die Luft aus einem liegenden Beutel hier besonders gut entweichen kann, da die Längsnaht, wie allgemein üblich, mittig entlang des Beutel verläuft, und sich dort die Luft ansammelt.

Als Entlüftungsstelle ist in einfacher technischer Weise ein Loch in der Beutelwand (Anspruch 7) oder eine unverschweißte Stelle in der geraden Schweißnaht geeignet (Anspruch 8). Die unverschweißte Stelle kann durch eine ausgesparte Schweißfläche erzeugt werden und hat den Vorteil, daß kein zusätzlicher Vorgang zur Erzeugung der Entlüftungsstelle notwendig ist.

Weist die unterbrochene Schweißnaht mittig den unverschweißten Bereich auf, und ist mindestens eine Entlüftungsstelle vorgesehen, die zwischen den Schweißnähten an einem Beutelrand liegt (Anspruch 9), so ist einerseits erreicht, daß die Entlüftungsstelle dort liegt, wo sich die Luft im Innern des Beutels bevorzugt sammelt, und anderseits, daß der Entlüftungskanal eine maximale Länge hat. Hierbei können auch zwei Entlüftungskanäle von einem unverschweißten Bereich zu Entlüftungsstellen führen, die sich an gegenüberliegenden Beutelrändern befinden.

Die maximale Länge für einen Entlüftungskanal ist stets dann erreicht, wenn analog Anspruch 10 die Länge des Entlüftungskanals lediglich durch die Länge einer Siegelnaht begrenzt ist.

Besteht der Beutel aus einer thermoplastischen Monofolie (Anspruch 11), so ist die Erzeugung einer Überlappungsnaht dahingehend ermöglicht, als gleiche Kunststoffe miteinander verschweißt werden.

Die Erzeugung von Löchern im Beutel als Entlüftungsstellen ist auf unterschiedliche Art und Weise möglich. Zum einen kann eine bereits mit äquidistanten Perforierungen versehene Folienbahn (Anspruch 13) von einer Vorratsrolle abgewickelt, umgeformt und verschweißt werden. Hierbei ist der technische Aufwand an einer Verpackungsmaschine minimiert. Oder die Vorstanzung der Folienbahn erfolgt direkt vor ihrer Umformung an der Verpackungsmaschine (Anspruch 14). Dies hat den Vorteil, daß herkömmliche Folien verwendet werden können. Je nach Art des zu verpackenden Produkts erfolgt eine Locherzeugung oder nicht. Und schließlich kann ein Beutel erst nach seinem Befüllen und Verschweißen mit mindestens einem Loch versehen werden (Anspruch 15). Hierbei können sowohl herkömmliche Folien als auch herkömmliche Verpackungsmaschinen verwendet werden.

Im folgenden werden der erfindungsgemäße Beutel und das erfindungsgemäße Verfahren anhand von Ausführungsbeispiele darstellenden Figuren näher beschrieben.
Es zeigt:
- Figur 1: in einer Draufsicht einen Schlauchbeutel, in dessen als Überlappungsnaht ausgestalteter Längsnaht zwei parallel zueinander verlaufende, einen Entlüftungskanal begrenzende Schweißnähte vorgesehen sind, wobei der Entlüftungskanal einen nicht verschweißten Bereich der unterbrochenen Schweißnaht mit mittig am Beutel als Entlüftungsstelle vorgesehenen Löchern verbindet;
- Figur 2: in einer Draufsicht einen Schlauchbeutel analog Figur 1, jedoch mit einem mittig angeordneten, nicht verschweißten Bereich und zwei Entlüftungsstellen, die jeweils an einem Beutelrand liegen;
- Figur 3: in einer Draufsicht einen Schlauchbeutel analog Figur 1, jedoch mit einem zweiten, nicht verschweißten Bereich als Entlüftungsstelle;
- Figur 4: in einem Schnitt entlang der Linie AA der Figur 3 den Schlauchbeutel der Figur 3;
- Figur 5: in einer Seitenansicht das Prinzip einer vertikalen Schlauchbeutelmaschine mit einer Einrichtung zur Erzeugung von Perforationen in einer ebenen Folienbahn;
- Figur 6: in einer Draufsicht die Schweißfläche einer Längssiegelbacke zur Erzeugung einer Längsnaht wie beim Beutel der Figur 1;
- Figur 7: in einem Schnitt entlang der Linie BB der Figur 6 die Längssiegelbacke der Figur 6, sowie
- Figur 8: in einer Draufsicht einen Siegelrandbeutel mit einem Entlüftungskanal in seiner Kopfnaht.

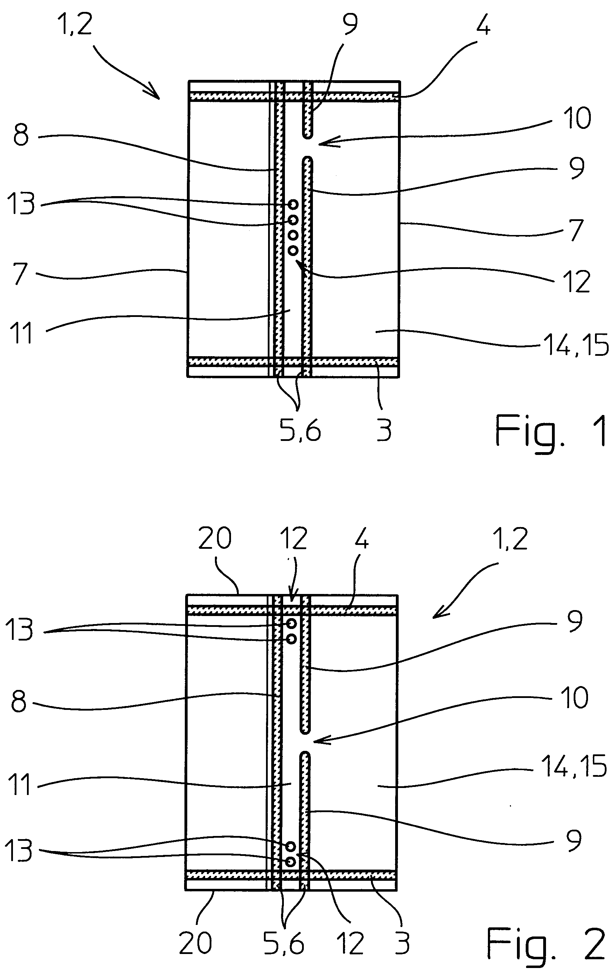

Ein Beutel 1 ist als Schlauchbeutel 2 ausgestaltet (Figur 1). Er weist eine Bodennaht 3, eine Kopfnaht 4 und eine senkrecht zur Bodennaht 3 und zur Kopfnaht 4 verlaufende, als Überlappungsnaht 5 ausgestaltete Längsnaht 6 auf. Die Längsnaht 6 ist aus zwei geraden, zueinander parallelen und parallel zum Beutelrand 7 verlaufenden Schweißnähten 8, 9 gebildet. Während die eine Schweißnaht 8 durchgehend ist, ist die andere Schweißnaht 9 von einem nicht verschweißten Bereich 10 unterbrochen. Die Schweißnähte 8, 9 begrenzen einen Entlüftungskanal 11, durch den Luft aus dem Innern des Beutels 1 über eine Entlüftungsstelle 12 aus dem Beutel 1 gebracht werden kann. Als Entlüftungsstelle 12 sind vier Löcher 13 in der Beutelwand 14 vorgesehen. Die Überlappungsnaht 5 weist also die Schweißnähte 8, 9, den Entlüftungskanal 11 und die Entlüftungsstelle 12 auf. Der Beutel 1 besteht aus einer thermoplastischen Monofolie 15.

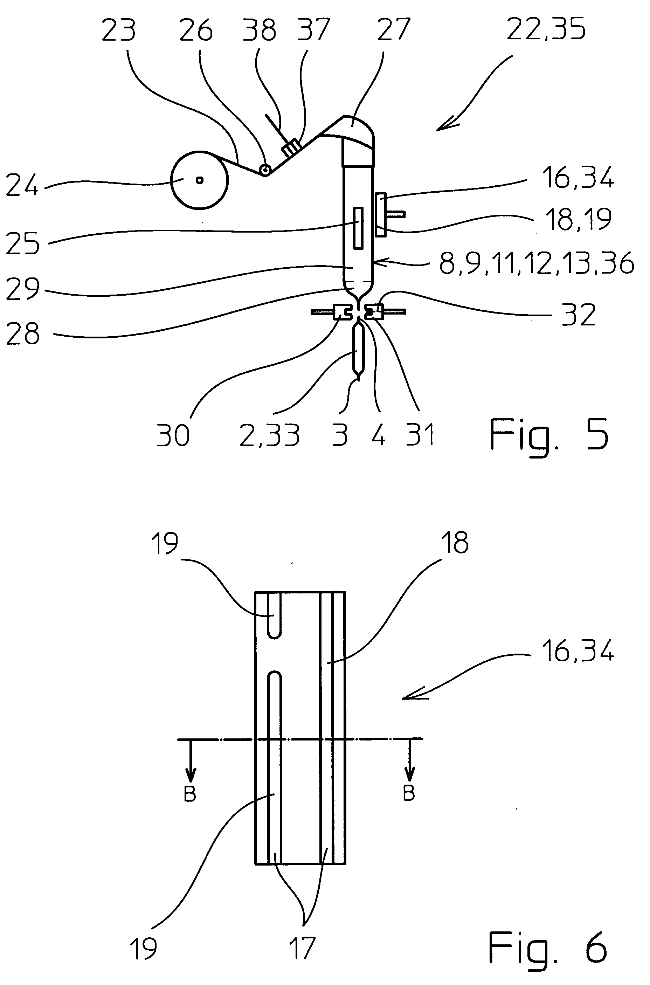

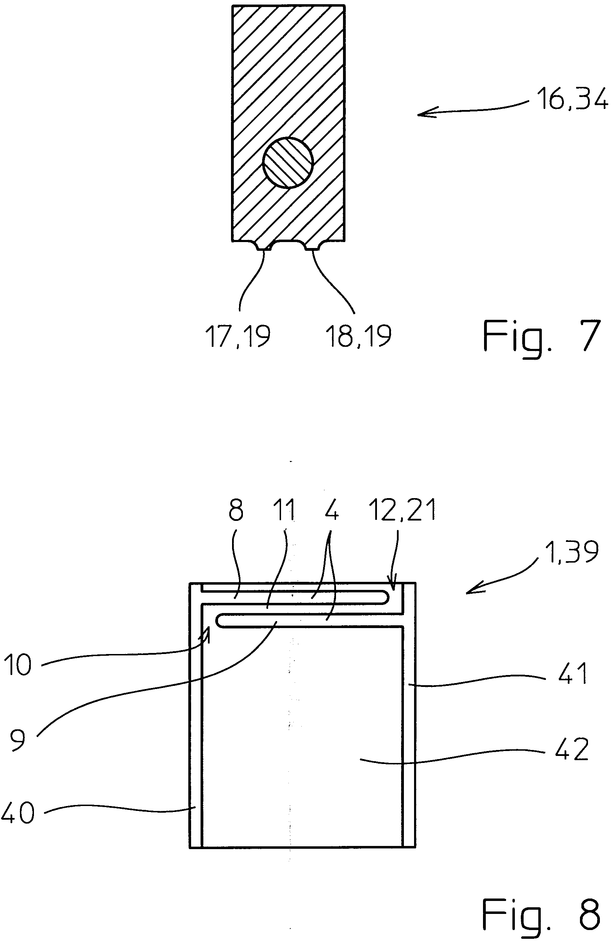

Der Beutel 1 wird mittels einer Längssiegelbacke 16 bzgl. seiner Längsnaht 6 verschweißt (Figur 6, Figur 7). Die Schweißfläche 17 der Längssiegelbacke 16 weist zwei gerade Schweißstege 18, 19 auf. Ein Schweißsteg ist durchgehend, der andere Schweißsteg 19 ist unterbrochen. Der durchgehende Schweißsteg 18 erzeugt die durchgehende Schweißnaht 8 und der unterbrochene Schweißsteg 19 die unterbrochene Schweißnaht 9. Die Erzeugung der Schweißnähte 8, 9 erfolgt also ohne zusätzliche Schweißbacken und ohne zusätzlichen Zeitaufwand im Vergleich zu einer herkömmlichen Schlauchbeutelerzeugung.

Beim Ausführungsbeispiel der Figur 2 weist die unterbrochene Schweißnaht 9 mittig den unverschweißten Bereich 10 auf. Es sind hier zwei Entlüftungsstellen 12 vorgesehen. Jede Entlüftungsstelle 12 hat zwei Löcher 13 und liegt zwischen den Schweißnähten 8, 9 an einem Beuelrand 20.

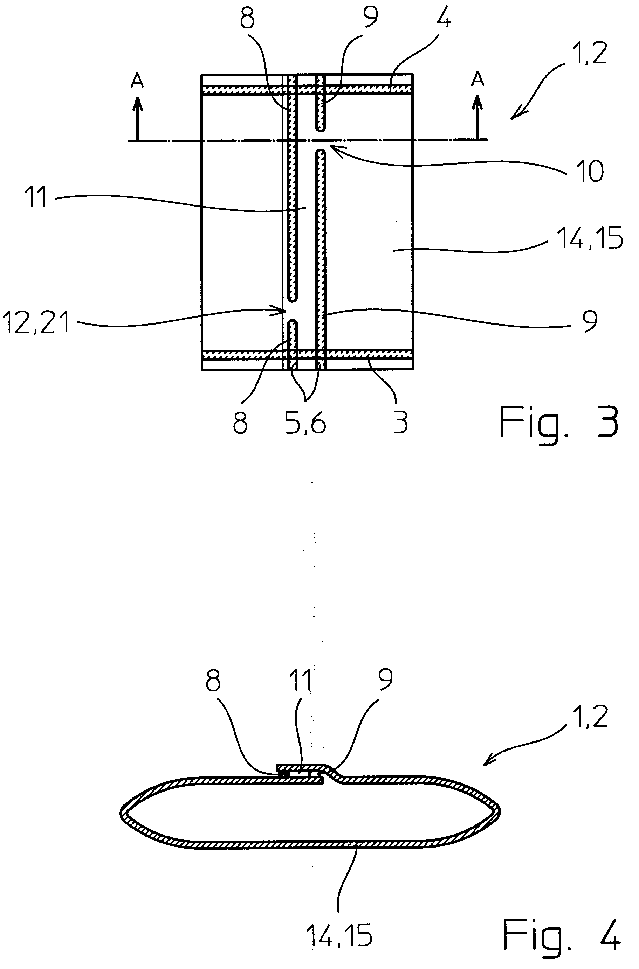

Beim Ausführungsbeispiel der Figuren 3 und 4 ist als Entlüftungsstelle 12 eine nicht verschweißte Stelle 21 in der geraden Schweißnaht 8 vorgesehen. Die Luft verläßt über den nicht verschweißten Bereich 10 der Schweißnaht 9, den Entlüftungskanal 11 und die nicht verschweißte Stelle 21 den Beutel 1. Die Stelle 21 ist enger als der Bereich 10. Die ausströmende Luft nimmt etwas von dem staubigen Produkt, welches sich im Beutel 1 befindet, mit. Infolge der großen Länge des Entlüftungskanals 11 und der Enge der Stelle 21 ist es unwahrscheinlich, daß eine nennenswerte Menge an Produkt den Beutel 1 über die Stelle 21 verläßt.

Ein Schlauchbeutel 2 analog der Figuren 1 bis 4 kann mit einer herkömmlichen vertikalen Schlauchbeutelmaschine 22 hergestellt werden (Figur 5). Hierbei wird eine ebene Folienbahn 23 von einer Vorratsrolle 24 mittels eines Abzugs 25 abgezogen und weitertransportiert. Die ebene Folienbahn 23 wird über eine Umlenkrolle 26 einer Umformeinrichtung 27 zugeführt und dort zu einem Folienschlauch 28 geformt. Der Folienschlauch 28 wird mittels Schweißnähten 3, 8, 9 längs und bodenseitig verschweißt, durch eine Fülleinrichtung 29 befüllt, und mittels einer Kopfnaht 4 verschlossen. Die Längsverschweißung erfolgt mittels einer gegen den Folienschlauch 28 und die rohrförmige Fülleinrichtung 29 wirkenden Längssiegelbacke 16. Die Erzeugung der Kopfnaht 4 und der Bodennaht 3 geschieht mit gegeneinander beweglichen Querbacken 30, 31. Eine der Querbacken 31 enthält ein Stechmesser 32, um den erzeugten, befüllten Beutel 33, der ein Schlauchbeutel 2 ist, vom Folienschlauch 28 abzutrennen. Die Schweißnähte 8, 9 und der Entlüftungskanal 11 werden mit der Längssiegelbacke 16 (Figur 6, Figur 7) als einzigem Schweißwerkzeug 34 hierfür erzeugt.

Zur Erzeugung der Löcher 13 der Entlüftungsstelle 12 wird die Folienbahn 23 direkt vor ihrer Umformung an der Verpackungsmaschine 35 mit äquidistanten Perforierungen 36 versehen. Jeweils ein Zinken 37 einer Stechgabel 38 erzeugt ein Loch 13 der Perforierung 36 in der Folienbahn 23.

Ein erfindungsgemäßer Beutel 1 kann auch als Siegelrandbeutel 39 mit Randnähten 40, 41 und einer Kopfnaht 4 ausgestaltet sein (Figur 8). Die Schweißnähte 8, 9, die den Entlüftungskanal 11 begrenzen, sind in der Kopfnaht 4 vorgesehen. Die Länge des Entlüftungskanals 11 ist lediglich durch die Länge der Siegelnähte 8, 9 begrenzt. Ein unverschweißter Bereich 10 und eine unverschweißte Stelle 21 erlauben der Luft des Innenraums des Beutels 1 ein Ausströmen. Die Folie des Beutels 1 ist eine Laminatfolie 42.

## Patentansprüche

1. Beutel mit mindestens einer Entlüftungsstelle, dadurch gekennzeichnet, daß der Beutel (1) entlang einer geraden, parallel zum Beutelrand (7, 20) verlaufenden Schweißnaht (8) eine weitere, von einem nicht verschweißten Bereich (10) unterbrochene Schweißnaht (9) aufweist, und daß zwischen den Schweißnähten (8, 9) mindestens ein Entlüftungskanal (11) vorgesehen ist, der zu mindestens einer Entlüftungsstelle (12) führt.

2. Beutel nach Anspruch 1, dadurch gekennzeichnet, daß der Beutel (1) als Schlauchbeutel (2) mit einer Bodennaht (3), einer Kopfnaht (4), und einer senkrecht zur Bodennaht (3) und Kopfnaht (4) verlaufenden, als Überlappungsnaht (5) ausgestalteten Längsnaht (6) ausgestaltet ist.

3. Beutel nach Anspruch 1, dadurch gekennzeichnet, daß der Beutel (1) als Siegelrandbeutel (39) mit Randnähten (40, 31) und einer Kopfnaht (4) ausgestaltet ist.

4. Beutel nach Anspruch 2, dadurch gekennzeichnet, daß die Überlappungsnaht (5) die gerade Schweißnaht (8), die unterbrochene Schweißnaht (9), den Entlüftungskanal (11) und die Entlüftungsstelle (12) aufweist.

5. Beutel nach Anspruch 2, dadurch gekennzeichnet, daß die Schweißnähte in der Kopfnaht oder der Bodennaht vorgesehen sind.

6. Beutel nach Anspruch 3, dadurch gekennzeichnet, daß die Schweißnähte (8, 9) in der Kopfnaht (4) oder mindestens einer Randnaht (40, 41) vorgesehen sind.

7. Beutel nach Anspruch 1, dadurch gekennzeichnet, daß als Entlüftungsstelle (12) ein Loch (13) in der Beutelwand (14) vorgesehen ist.

8. Beutel nach Anspruch 1, dadurch gekennzeichnet, daß als Entlüftungsstelle (12) eine unverschweißte Stelle (21) in der geraden Schweißnaht (8) vorgesehen ist.

9. Beutel nach Anspruch 1, Anspruch 7 oder Anspruch 8, dadurch gekennzeichnet, daß die unterbrochene Schweißnaht (9) mittig den unverschweißten Bereich (10) aufweist, und daß mindestens eine Entlüftungsstelle (12) vorgesehen ist, die zwischen den Schweißnähten (8, 9) an einem Beutelrand (20) liegt.

10. Beutel nach Anspruch 1, Anspruch 7 oder Anspruch 8, dadurch gekennzeichnet, daß die Länge des Entlüftungskanals (11) durch die Länge einer Siegelnaht (8, 9) begrenzt ist.

11. Beutel nach Anspruch 2, dadurch gekennzeichnet, daß der Beutel (1) aus einer thermoplastischen Monofolie (15) besteht.

12. Verfahren zur Herstellung eines Beutels des Anspruchs 1, wobei eine ebene Folienbahn (23) an einer Umformeinrichtung (27) umgeformt, teilweise mittels Schweißnähten (3, 8, 9) verschweißt, durch eine Fülleinrichtung (29) befüllt, mittels einer weiteren Schweißnaht (4) restverschweißt und zur Abtrennung des befüllten, verschlossenen Beutels (33) von der Folienbahn (23) durchtrennt wird, dadurch gekennzeichnet, daß während der Erzeugung einer den Beutel (33) verschweißenden, geraden Schweißnaht (8) der Entlüftungskanal (11) mittels einer zweiten, den Entlüftungskanal (11) begrenzenden Schweißnaht (9) mit einem einzigen Schweißwerkzeug (34) erzeugt wird.

13. Verfahren nach Anspruch 12, dadurch gekennzeichnet, daß eine mit äquidistanten Perforierungen (36) als Entlüftungsstellen (12) vorgestanzte Folienbahn (23) umgeformt und verschweißt wird.

14. Verfahren nach Anspruch 13, dadurch gekennzeichnet, daß die Vorstanzung der Folienbahn (23) direkt vor ihrer Umformung an einer Verpackungsmaschine (35) erfolgt.

15. Verfahren nach Anspruch 12, dadurch gekennzeichnet, daß der Beutel nach seinem Befüllen und Verschweißen mit mindestens einem Loch versehen wird.
